# EUROPEAN PATENT APPLICATION

(11) **EP 2 860 681 A1**
(43) Date of publication of application: **15.04.2015**
(21) Application number: 12878552.4
(22) Date of filing: 31.07.2012
(51) Int. Cl.: G06Q 20/32

(54) **MOBILE TERMINAL AND METHOD AND SYSTEM FOR INQUIRING INFORMATION OF INTELLIGENT CARD**

(30) Priority: 08.06.2012 CN 201210188637
(71) Applicant: ZTE Corporation, Shenzhen, Guangdong 518057 (CN)
(72) Inventor: LI, Shuang, Shenzhen Guangdong 518057 (CN)
(74) Representative: Wilson Gunn
(86) International application number: PCT/CN2012/079427
(87) International publication number: WO 2013/181885

(57) **Abstract**

Described is a mobile terminal. The mobile terminal includes: a SIM card identity registration module, configured to acquire registration information of a user; a security management module, configured to encrypt the registration information to acquire encrypted registration information; and a NFC authentication module, configured to acquire and transmit information about an intelligent card to the security management module which is also configured to decrypt the encrypted registration information to acquire the decrypted information, match the information about the intelligent card with the decrypted information, and if the matching is successful, output a balance and/or transaction information stored in the intelligent card. Described also is a method and a system for inquiring information stored in an intelligent card by using a mobile terminal. With what described, the balance and the transaction information in the intelligent card can be quickly inquired through the mobile terminal by using NFC communication technology.

## Description

### TECHNICAL FIELD

The disclosure relates to the field of wireless communications, and in particular to a mobile terminal and a method and a system for inquiring information stored in an intelligent card by using the same.

### BACKGROUND

With the rapid development of mobile communication, Internet and computer technology, mobile phone payment has become popular among consumers because of its convenience and speediness from its birth. The consumers can finish many payment operations such as financial management, mobile phone recharge, payment for water, electricity and coal gas services, credit card payment, flight ticket booking or the like as long as they have mobile phones. Domestic mobile phone payment technology mainly includes a 2.4GHz-based Radio Frequency Identification-Subscriber Identity Module (RFID-SIM) solution, a 13.56MHz-based Near Field Communication (NFC) solution, a double-interface SIMPass solution, a 13.56MHz technology-based SIM-plus solution and the like.

NFC is a technology for implementing near field wireless communication based on a mobile phone or other mobile terminal. NFC information is transferred in a way of electromagnetic inductive coupling of radio frequency part in a frequency spectrum. The NFC realizes a convenient, fast and safe near field communication between two electronic devices through fast and easy wireless connection. The electronic devices are such as mobile phones, PDAs, computers and payment terminals. Since the NFC adopts unique signal attenuation technology, the NFC has the features such as near field, high bandwidth, low power consumption compared to the RFID. Moreover, the NFC is compatible with the existing contactless intelligent card technology and has become a formal standard supported by more and more major manufacturers. After it is combined with the contactless technology, the consumers may shop safely and conveniently by using a mobile device supporting the NFC technology and acquire relevant information from an electronic tag.

Meanwhile, some banks upgraded a traditional "magnetic stripe bank card" to a "financial bank card" which adopts the 13.56MHz standard, so more applications may be implanted into the card. That is, the financial bank card may be combined with a large number of applications such as social security, public transport, retail and hospital.

Under such a background, the consumers have more and more requirements for interactive application of the mobile phone and financial bank card. For example, one way of inquiring the bank card is to inquire on the bank terminal, and the other way is to inquire on the netbank client. For the former, the user can only go to the bank, or shops or restaurants where the bank terminals are widely installed, so the user cannot inquire at the places where these bank terminals are not installed. For the latter, the user needs to register for the netbank, and it is very inconvenient to log in to the netbank each time. If the NFC technology is utilized, when the mobile phone touches the bank card, the balance and transaction history of the bank card will be displayed on the screen of the mobile phone, which brings great convenience for the user. Of course, security is especially critical during this process. At present, the commonly used way is to make a security certificate through a certification password.

The relevant art proposes a method for payment transaction by using an electronic payment account after an SIM card and a bank card of a mobile terminal is bound. However, it neither relates to the NFC communication technology nor provides a perfect security certificate mechanism, only describes in general terms the final authentication and certification are implemented by the bank terminal.

The relevant art also proposes a cash register system and fund collection and payment method by using certification information of a mobile phone access network. In the method, the mobile phone is built in the cash register, and the cash register communicates with an account management and settlement centre through the mobile phone in which the SIM card of the user is inserted. However, in the method, it is also not described clearly an encryption way at the time of communication and a way of verifying identity information of SIM in the mobile phone.

### SUMMARY

Among others, the technical problem to be solved by the disclosure is to provide a mobile terminal and a method and a system for inquiring information stored in an intelligent card by using the same, in which a balance and transaction record information in the intelligent card can be inquired rapidly by using an NFC communication technology.

In order to solve the above technical problem, an embodiment of the disclosure provides a mobile terminal, including: an SIM card identity registration module, a security management module, and an NFC authentication module.

The SIM card identity registration module is configured to acquire registration information of a user.

The security management module is configured to encrypt the registration information to acquire encrypted registration information.

The NFC authentication module is configured to acquire information about the intelligent card and transmit the information about the intelligent card to the security management module.

The security management module is also configured to decrypt the encrypted registration information to acquire the decrypted information, match the information about the intelligent card with the decrypted information, and if the matching is successful, output a balance and/or transaction information stored in the intelligent card.

The registration information may include: first registration information, second registration information and third registration information.

The security management module may encrypt the first registration information, the second registration information and the third registration information respectively to acquire first encrypted registration information, second encrypted registration information and third encrypted registration information, and may store the third encrypted registration information in a memory of the mobile terminal.

The mobile terminal may further include a remote control module, configured to transmit the first encrypted registration information and the second encrypted registration information to a server. The server may store the first encrypted registration information in a first database of the server and may store the second encrypted registration information in a second database of the server.

The first registration information may include a serial number SIMID of the memory of the mobile terminal, a card number and an electronic account login password of the intelligent card input by the user during registration. The second registration information may include the SIMID and an identity verification password. The third registration information may include the SIMID and the card number of the intelligent card.

The NFC authentication module may be specifically configured to acquire the card number of the intelligent card through a radio frequency interface and transmit the card number of the intelligent card to the security management module.

The security management module may be specifically configured to: read the third registration information from the memory and decrypt the read third registration information to acquire the card number of the intelligent card and match the acquired card number of the intelligent card with the card number of the intelligent card acquired from the NFC authentication module, if the matching is successful, acquire the second registration information from the second database of the server through the remote control module and decrypt the acquired second registration information to acquire the identity verification password and match the acquired identity verification password with the identity verification password input by the user, if the matching is successful, acquire the first registration information from the first database of the server through the remote control module and decrypt the acquired first registration information to acquire the electronic account login password, and acquire the balance and/or transaction information stored in the intelligent card through the electronic account login password.

The mobile terminal may further include: an account management module, configured to log in to an account of the intelligent card through the electronic account login password, and output and display the balance and/or transaction information stored in the intelligent card, and configured to add, delete and/or modify the card number of the intelligent card bound to the mobile terminal, the electronic account login password and the identity verification password.

An embodiment of the disclosure also provides a method for inquiring information stored in an intelligent card by using a mobile terminal, including that:
registration information of a user is acquired;
the registration information is encrypted to acquire encrypted registration information;
information about the intelligent card is acquired; and
the encrypted registration information is decrypted to acquire the decrypted information, the information about the intelligent card is matched with the decrypted information, and if the matching is successful, a balance and/or transaction stored in the intelligent card is output.

The registration information of the user may include: first registration information, second registration information and third registration information.

The step of encrypting the registration information to acquire encrypted registration information may include:
encrypting the first registration information, the second registration information and the third registration information respectively to acquire first encrypted registration information, second encrypted registration information and third encrypted registration information.

The method may further include that:
the third encrypted registration information is stored in a memory of the mobile terminal; and
the first encrypted registration information and the second encrypted registration information are transmitted to a server which may store the first encrypted registration information in a first database of the server and store the second encrypted registration information in a second database of the server.

The first registration information may include a serial number SIMID of the memory of the mobile terminal, a card number and an electronic account login password of the intelligent card input by the user during registration.

The second registration information may include the SIMID and an identity verification password.

The third registration information may include the SIMID and the card number of the intelligent card.

The step of decrypting the encrypted registration information to acquire the decrypted information, matching the information about the intelligent card with the decrypted information, and if the matching is successful, outputting the balance and/or transaction information stored in the intelligent card may include:
reading the third registration information from the memory and decrypting the read third registration information to acquire the card number of the intelligent card;
matching the acquired card number of the intelligent card with the card number of the intelligent card acquired through a radio frequency interface;
if the matching is successful, acquiring the second registration information from the second database of the server and decrypting the acquired second registration information to acquire the identity verification password;
matching the acquired identity verification password with the identity verification password input by the user;
if the matching is successful, acquiring the first registration information from the first database of the server and decrypting the acquired first registration information to acquire the electronic account login password; and
acquiring the balance and/or transaction information stored in the intelligent card through the electronic account login password.

An embodiment of the disclosure also provides a system for inquiring information stored in an intelligent card by using a mobile terminal, including: a mobile terminal, an intelligent card and a server. The mobile terminal includes a SIM card identity registration module, a security management module, and a NFC authentication module.

The SIM card identity registration module is configured to acquire registration information of a user.

The security management module is configured to encrypt the registration information to acquire encrypted registration information.

The NFC authentication module is configured to acquire the information about the intelligent card and transmit the information about the intelligent card to the security management module.

The security management module may be also configured to decrypt the encrypted registration information to acquire the decrypted information, match the information about the intelligent card with the decrypted information, and if the matching is successful, output a balance and/or transaction information stored in the intelligent card.

The server is configured to acquire the encrypted registration information from the mobile terminal and store the encrypted registration information.

The beneficial effects of the above technical solutions of the disclosure include:

In the above solutions, the mobile terminal and the intelligent card are bounded together, and the balance and transaction details can be rapidly inquired as long as all intelligent cards registered successfully on the mobile terminal.

### BRIEF DESCRIPTION OF THE DRAWINGS

Fig. 1 is a structural diagram of a mobile terminal according to an embodiment of the disclosure;
Fig. 2 is an architecture diagram of a system for inquiring an intelligent card by using a mobile terminal according to an embodiment of the disclosure; and
Fig. 3 is a flowchart of a method for inquiring an intelligent card by using a mobile terminal according to an embodiment of the disclosure.

### DETAILED DESCRIPTION

In order to make the technical problems to be solved, technical solutions and advantages of the disclosure more clear, they will be described in detail below in conjunction with the accompanying drawings and specific embodiments.

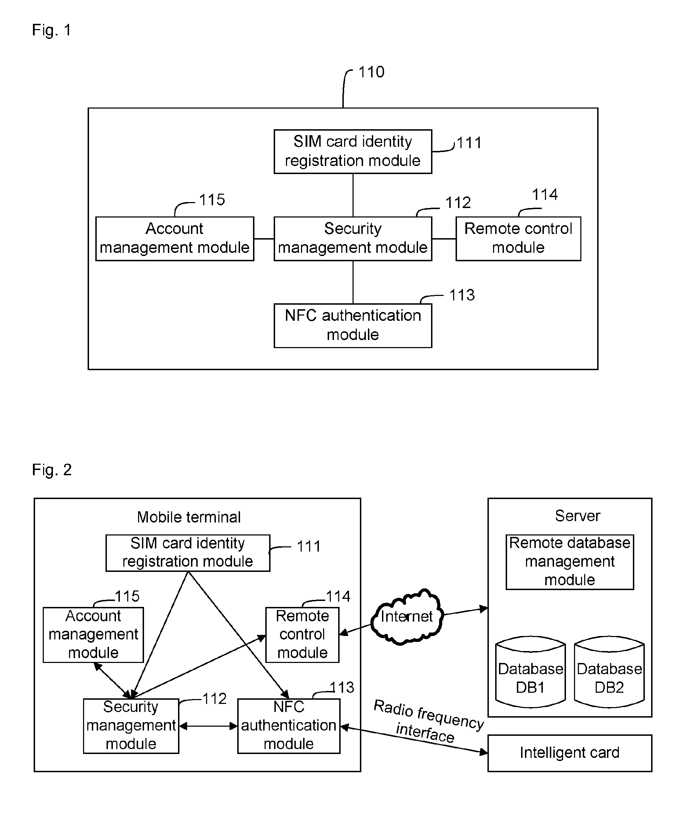

As shown in Fig. 1, a mobile terminal 110 according to an embodiment of the disclosure includes an SIM card identity registration module 111, a security management module 112, and an NFC authentication module 113.

The SIM card identity registration module 111 is configured to acquire registration information of a user.

The security management module 112 is configured to encrypt the registration information to acquire encrypted registration information.

The NFC authentication module 113 is configured to acquire information about an intelligent card and transmit the information about the intelligent card to the security management module.

The security management module 112 is also configured to decrypt the encrypted registration information to acquire the decrypted information, match the information about the intelligent card with the decrypted information, and if the matching is successful, output a balance and/or transaction information stored in the intelligent card.

In the embodiment of the disclosure, the balance and/or transaction information in the intelligent card may be inquired rapidly by acquiring the information about the intelligent card through the NFC authentication module, and matching it with the information about the intelligent card decrypted by the security management module of the mobile terminal, which is convenient for the user to use, and ensures the security of the intelligent card.

In another embodiment of the disclosure, on the basis of all modules of the mobile terminal above, the registration information includes: first registration information, second registration information and third registration information.

The security management module 112 encrypts the first registration information, the second registration information and the third registration information respectively to acquire first encrypted registration information, second encrypted registration information and third encrypted registration information, and stores the third encrypted registration information in a memory of the mobile terminal, such as in a SIM card.

Accordingly, the mobile terminal may further include a remote control module 114, configured to transmit the first encrypted registration information and the second encrypted registration information to a remote server, and the remote server stores the first encrypted registration information in a first database (DB1) of the remote server and stores the second encrypted registration information in a second database (DB2) of the remote server.

The first registration information may include a serial number (i.e., SIMID) of the memory of the mobile terminal, a card number and an electronic account login password of the intelligent card input by the user during registration. The second registration information may include the SIMID and an identity verification password. The third registration information may include the SIMID, and the card number of the intelligent card.

The SIMID of the mobile terminal does not need to be input by the user, the mobile terminal acquires the SIMID of the mobile terminal automatically, and displays the SIMID on a screen for user's confirmation. The card number of the intelligent card is in a one-to-one relationship with the electronic account login password, that is, one card number of the intelligent card corresponds to unique electronic account login password. The mobile terminal in the embodiment of the disclosure supports a multi-intelligent card solution, that is, for one SIMID, multiple intelligent cards may be registered. The user may inquire the balance and transaction record of the card rapidly as long as the intelligent card is successfully registered on the mobile terminal. The identity verification password is in one-to-one relationship with the SIMID, that is, for one SIMID, only one identity verification password can be registered.

In the embodiment, the remote control module 114 encrypts some registration information in the mobile terminal and transmits them to the remote server for store. the information are retrieved from the remote server during use and decrypted, which further ensures the security when the mobile terminal inquires the balance and transaction information stored in the intelligent card.

In another embodiment of the disclosure, on the basis of all the modules above, the NFC authentication module 113 may be specifically configured to acquire the card number of the intelligent card through a radio frequency interface and transmit the card number of the intelligent card to the security management module 112.

The security management module 112 may be specifically configured to: read the third encrypted registration information from the memory and decrypt the read third registration information to acquire the card number of the intelligent card and match the acquired card number of the intelligent card with the card number of the intelligent card acquired from the NFC authentication module, if the matching is successful, acquire the second registration information from the second database of the server through the remote control module 114 and decrypt the acquired second registration information to acquire the identity verification password and match the acquired identity verification password with the identity verification password input by the user, if the matching is successful, acquire the first registration information from the first database of the server through the remote control module 114 and decrypt the acquired first registration information to acquire the electronic account login password, and acquire the balance and/or transaction information stored in the intelligent card through the electronic account login password.

When the user submits the registration information to the mobile terminal, the registered SIMID, the card number of the intelligent card and the electronic account login password (the three pieces of information are referred to as M1, i.e., the first registration information) are encrypted by the security management module 112. The encrypted information is transmitted to the database DB1 of the remote server by the remote control module 114 and stored. The SIMID and the identity verification password (the two pieces of information are referred to as M2, i.e., the second registration information) are encrypted by the security management module 112. The encrypted information is transmitted to the database DB2 of the remote server by the remote control module 114 and stored. The SIMID and the card number of the intelligent card (the two pieces of information are referred to as M3, i.e., the third registration information) are encrypted by the security management module 112, and then stored in the memory of the mobile terminal such as in the SIM card.

After the registration is finished, when the user makes the mobile terminal touch the intelligent card, the NFC authentication module 113 detects the intelligent card through a radio frequency interface and establishes a connection with the intelligent card, and then forwards the detected card number of the intelligent card to the SIM card.

The security management module 112 decrypts M3 stored in the SIM card, and compares the card number of the intelligent card acquired by the NFC authentication module 113 with data acquired by decrypting the M3. If two pieces of such information are matched, the mobile terminal prompts the user to input the identity verification password. If the matching is unsuccessful, the mobile terminal prompts Failed. After the identity verification password input by the user is received, a request is transmitted to the remote control module 114, and information in the remote database DB2 is acquired through the remote control module 114. The security management module 112 decrypts the acquired M2 from the DB2 to acquire the identity verification password, and matches the acquired identity verification password with the verification password input by the user, and if the matching is successful, transmits a request to the remote control module 114, the remote control module 114 acquires the information in the remote database DB1. The security management module 112 decrypts the acquired M1 from the DB1 to acquire the electronic account login password through which the account of the intelligent card of the user is logged in, and balance and transaction information stored in the intelligent card are acquired through the account management module 115, and displayed on the screen of the mobile terminal.

The account management module 115 of the mobile terminal 110 is configured to log in to an account of the intelligent card through the acquired electronic account login password, and output and display the balance and/or transaction information stored in the intelligent card, and configured to add, delete and/or modify the card number of the intelligent card bound to the mobile terminal, the electronic account login password and the identity verification password.

If the user applies for a new intelligent card and wants to inquire the balance and transaction details rapidly, then he/she can first add the card number and the electronic account login password of the intelligent card to the mobile terminal through the account management module 115. If the user wants to cancel the intelligent card in the bank and does not want to inquire the balance and transaction details of the card any more, then he/she can delete the card number and the electronic account login password of the intelligent card from the mobile terminal through the account management module 115. If the user wants to modify the electronic account login password of the bank terminal of a bound intelligent card, the electronic account login password of the intelligent card may be modified through the account management module 115. If the electronic account login password is inconsistent with the password of the bank terminal, then the login will fail. The user may also modify the identity verification password. Modifying the identity verification password aperiodically helps protect the user information.

With the solutions of the above embodiment of the disclosure, the mobile terminal is bound to the intelligent card, the balance and the transaction details may be inquired rapidly as long as the intelligent card is successfully registered on the mobile terminal.

The involved NFC authentication technology is a first lock for protecting the user information, and no information will be leaked from the intelligent card if authentication via the NFC does not succeeds. Only the intelligent card which is successfully authenticated by the NFC may enter the next verification operation.

The electronic account login password and the identity verification password registered by the user are encrypted and transmitted by the remote control module 114 to the remote databases for store. The electronic account login password and the identity verification password are unbreakable even if they are intercepted during transmission. Moreover, the electronic account login password and the identity verification password after being encrypted are stored in different remote databases, which increase the difficulty in acquiring and improve the security. Only the registered card number of the intelligent card is stored in the SIM card after being encrypted. Even if the information on the SIM card is stolen, the intelligent card of the user is still safe. The identity verification mechanism is a second lock for protecting the user information. If the identity verification fails, the system prompts Failed and does not make next operation, and the information stored in the intelligent card will not be leaked.

The account management may be convenient for the user to add, modify and delete the card number and the electronic account login password of the intelligent card. The intelligent card according to the embodiments of the disclosure includes but is not limited to an intelligent card having value-storing and transaction functions such as a financial bank card, a pre-paid card, a shopping card, a refuelling card. If the intelligent card is a bank card, the adaptive operation after newly applying for a bank card, cancelling the bank card or modifying the bank account password by the user can be eased.

As shown in Fig. 2, an embodiment of the disclosure also provides a system for inquiring information stored in an intelligent card by using a mobile terminal, including: a mobile terminal, an intelligent card and a server.

The mobile terminal 110 includes:
an SIM card identity registration module 111, configured to acquire registration information of a user;
a security management module 112, configured to encrypt the registration information to acquire encrypted registration information;
an NFC authentication module 113, configured to acquire the information about an intelligent card and transmit the information about the intelligent card to the security management module;
the security management module 112 is also configured to decrypt the encrypted registration information to acquire the decrypted information, match information relevant to the intelligent card with the decrypted information, and if the matching is successful, output a balance and/or transaction information stored in the intelligent card.

The server is configured to acquire some of the encrypted registration information from the mobile terminal and store the some of encrypted registration information.

Specifically, the mobile terminal in the system may be the mobile terminal as shown in Fig. 1. In the system, the server includes a remote database management module and a remote database DB1 and a remote database DB2. The remote database management module is configured to establish, store, modify and access information in the remote databases, and perform security control and backup on the information in the remote databases.

The SIM card identity registration module comprises a flow when the user uses the system for the first time. The user, through a network, registers a certification account which includes the information such as the SIMID of the mobile terminal used by the user, the card number of the intelligent card, the electronic account login password and the identity verification password. The SIMID of the mobile terminal is acquired automatically, and displayed on the screen for user's confirmation. The card number of the intelligent card is in one-to-one relationship with the electronic account login password, and one card number of the intelligent card corresponds to unique electronic account login password. The system supports a multi-intelligent card solution, that is, multiple intelligent cards may be registered by one SIMID. The user may inquire the balance and transaction record of the intelligent card rapidly as long as the intelligent card is successfully registered in the system. The identity verification password is in one-to-one relationship with the SIMID, that is, only one identity verification password is registered for one SIMID.

When the user submits the registered certification account to the terminal, the registered SIMID, the card number and the electronic account login password of the intelligent card (the three pieces of information are referred to as M1, i.e., the first registration information) are encrypted by the security management module 112. The encrypted information is transmitted to the database DB1 of the remote database management module by the remote control module 114 and stored. The SIMID and the identity verification password (the two pieces of information are referred to as M2) are encrypted by the security management module 112. The encrypted information is transmitted to the database DB2 of the remote database management module by the remote control module 114 and stored. The SIMID and the card number of the intelligent card (the two pieces of information are referred to as M3) are encrypted by the security management module 112, and stored in the SIM card.

After the registration is finished, when the user makes the mobile terminal tap the intelligent card, the NFC authentication module 113 detects the intelligent card through a radio frequency interface and establishes a connection with the intelligent card, and then forwards the detected card number of the intelligent card to the SIM card.

The security management module 112 decrypts M3 stored in the SIM card, and compares the card number of the intelligent card acquired by the NFC authentication module 113 with data acquired by decrypting the M3. If two pieces of such information are matched, the mobile terminal prompts the user to input the identity verification password. If the matching is unsuccessful, the mobile terminal prompts Failed. After the identity verification password input by the user is received, a request is transmitted to the remote control module, and information in the remote database DB2 is acquired through the remote control module 114 and the remote database management module. The security management module 112 decrypts the acquired M2 from the DB2 to acquire the identity verification password, and matches the acquired identity verification password with the verification password input by the user, and if the matching is successful, transmits a request to the remote control module, the remote control module 114 and the remote database management module acquire the information in the remote database DB1. The security management module 112 decrypts the acquired M1 from the DB1 to acquire the electronic account login password through the account of the intelligent card of the user can be logged in, and balance and transaction information stored in the intelligent card are acquired through the account management module 115, and displayed on the screen of the mobile terminal.

The account management module 115 may also add, delete and/or modify the card number of the intelligent card bound to the SIM card, the electronic account login password and the identity verification password. The intelligent card according to the embodiments of the disclosure includes but is not limited to an intelligent card having value-storing and transaction functions such as a financial bank card, a pre-paid card, a shopping card, a refuelling card. If the intelligent card is a bank card, and if the user newly applies for a financial bank card and wants to inquire the balance and transaction details rapidly, then he/she can first add the card number and the electronic account login password of the financial bank card to the mobile terminal through the account management module 115. If the user cancels the financial bank card in the bank and does not inquire the balance and transaction details of the card any more, then he/she can delete the card number and the electronic account login password of the financial bank card from the mobile terminal through the account management module 115. If the user wants to modify the electronic account login password of the bank terminal of a bound financial bank card, the electronic account login password of the financial bank card may be modified through the account management module 115. If the electronic account login password is inconsistent with the password of the bank terminal, then the login will fail. The user may also modify the identity verification password. Modifying the identity verification password aperiodically helps protect the user information.

The embodiment of the disclosure also provides a method for inquiring information stored in an intelligent card by using a mobile terminal, including:
Step 11: registration information of a user is acquired;
Step 12: the registration information is encrypted to acquire encrypted registration information;
Step 13: information relevant to an intelligent card is acquired;
Step 14: the encrypted registration information is decrypted to acquire the decrypted information, the information relevant to the intelligent card is matched with the decrypted information, and if the matching is successful, a balance and/or transaction information stored in the intelligent card are output.

The registration information may include: first registration information, second registration information and third registration information.
the step of encrypting the registration information to acquire encrypted registration information includes:
encrypting the first registration information, the second registration information and the third registration information respectively to acquire first encrypted registration information, second encrypted registration information and third encrypted registration information.

The method may further include that:
the third encrypted registration information is stored in a memory of the mobile terminal; and
the first encrypted registration information and the second encrypted registration information are transmitted to a remote server, the remote server stores the first encrypted registration information in a first database of the remote server and stores the second encrypted registration information in a second database of the remote server.

The first registration information may include a serial number (e.g., SIMID) of the memory of the mobile terminal, a card number and an electronic account login password of the intelligent card input by the user during registration. The second registration information may include the SIMID and an identity verification password. The third registration information may include the SIMID and the card number of the intelligent card.

The Step 14 may include:
the third encrypted registration information is read from the memory and the read third encrypted registration information is decrypted to acquire the card number of the intelligent card. The acquired card number of the intelligent card is matched with the card number of the intelligent card acquired through a radio frequency interface. If the matching is successful, the second encrypted registration information is acquired from the second database of the server and the acquired second encrypted registration information is decrypted to acquire the identity verification password. The acquired identity verification password is matched with the identity verification password input by the user. If the matching is successful, the first encrypted registration information is acquired from the first database of the server and the acquired first encrypted registration information is decrypted to acquire the electronic account login password. The balance and/or transaction information stored in the intelligent card is acquired through the electronic account login password.

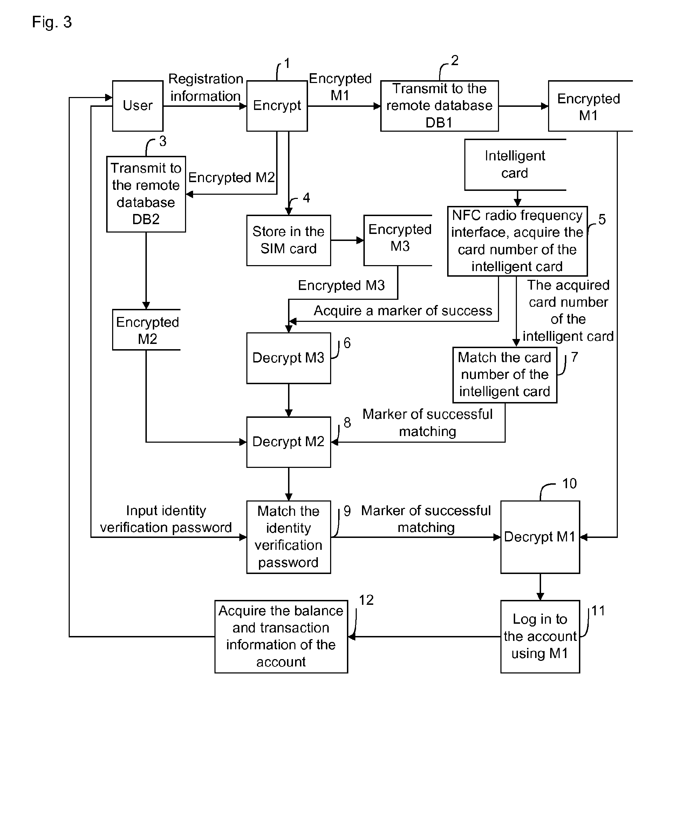

Specifically, a data flow diagram of a terminal system in which the balance and transaction details of the intelligent card are inquired by using NFC technology is as shown in Fig. 3.
1. When the user submits the registration information, the SIMID, the card number and the electronic account login password of the intelligent card (the three pieces of information are referred to as M1) are encrypted by the security management module 112.
2. The encrypted M1 is stored in the remote database DB1 after being processed by the remote control module 114 and the remote database management module.
3. The SIMID and the identity verification password (the two pieces of information are referred to as M2) in the user's registration information are encrypted by the security management module 112, and the encrypted M2 is stored in the remote database DB2 after being processed by the remote control module 114 and the remote database management module.
4. The SIMID and the card number of the intelligent card (the two pieces of information are referred to as M3) in the user's registration information are encrypted by the security management module 112, and the encrypted M3 is stored in the SIM card.
5. After the user makes the mobile terminal tap the intelligent card, the NFC authentication module 113 acquires the card number of the intelligent card through a radio frequency interface.
6. The M3 is decrypted once the acquiring operation is successful.
7. The decrypted card number of the intelligent card is matched with the card number of the intelligent card acquired by the NFC authentication module, and a marker of success is transmitted to the mobile terminal if the matching is successful.
8. The terminal prompts the user to input the identity verification password, after the user inputs the identity verification password, the mobile terminal acquires M2 through the remote control module and the remote database management module and decrypts M2.
9. The decrypted identity verification password is matched with the identity verification password input by the user, and a marker of success is transmitted to the mobile terminal if the matching is successful.
10. The terminal acquires M1 through the remote control module 114 and the remote database management module, and decrypts M1 to acquire the electronic account login password.
11. The intelligent card account is logged in through the electronic account login password to acquire the balance and transaction detail information of the account which are then displayed on the screen of the mobile terminal.

With the solutions of the above embodiments of the disclosure, the mobile terminal is bound to the intelligent card, the balance and transaction details may be inquired rapidly as long as the intelligent card is successfully registered on the mobile terminal.

The involved NFC authentication technology is a first lock for protecting the user information, and no information will be leaked from the intelligent card if authentication via the NFC does not succeeds. Only the intelligent card which is successfully authenticated by the NFC may enter the next verification operation.

The electronic account login password and the identity verification password registered by the user are encrypted and transmitted by the remote control module 114 to the remote databases for store. The electronic account login password and the identity verification password are unbreakable even if they are intercepted during transmission. Moreover, the electronic account login password and the identity verification password after being encrypted are stored in different remote databases, which increase the difficulty in acquiring and improve the security. Only the registered card number of the intelligent card is stored in the SIM card after being encrypted. Even if the information on the SIM card is stolen, the intelligent card of the user is still safe. The identity verification mechanism is a second lock for protecting the user information. If the identity verification fails, the system prompts Failed and does not make next operation, and the information stored in the intelligent card will not be leaked.

The account management may be convenient for the user to add, modify and delete the card number and the electronic account login password of the intelligent card. The intelligent card according to the embodiments of the disclosure includes but is not limited to an intelligent card having value-storing and transaction functions such as a financial bank card, a pre-paid card, a shopping card, a refuelling card. If the intelligent card is a bank card, the adaptive operation after newly applying for a bank card, cancelling the bank card or modifying the bank account password by the user can be eased.

The above are only preferred embodiments of the disclosure. It should be noted that for those of ordinary skill in the art, several improvements and modifications may also be made without departing from the disclosure, these improvements and modifications shall also be deemed to be within the scope of protection of the disclosure.

## Claims

1. A mobile terminal, comprising: a Subscriber Identity Module (SIM) card identity registration module, a security management module, and a Near Field Communication (NFC) authentication module,
wherein the SIM card identity registration module is configured to acquire registration information of a user,
wherein the security management module is configured to encrypt the registration information to acquire encrypted registration information,
wherein the NFC authentication module is configured to acquire information about an intelligent card and transmit the information about the intelligent card to the security management module, and
wherein the security management module is configured to decrypt the encrypted registration information to acquire the decrypted information, match the information about the intelligent card with the decrypted information, and in the case the matching is successful, output a balance and/or transaction information stored in the intelligent card.

2. The mobile terminal according to claim 1, wherein the registration information comprises: first registration information, second registration information and third registration information,
wherein the security management module encrypts the first registration information, the second registration information and the third registration information respectively to acquire first encrypted registration information, second encrypted registration information and third encrypted registration information, and stores the third encrypted registration information in a memory of the mobile terminal, and
the mobile terminal further comprises a remote control module, configured to transmit the first encrypted registration information and the second encrypted registration information to a server which stores the first encrypted registration information in a first database of the server and stores the second encrypted registration information in a second database of the server.

3. The mobile terminal according to claim 2, wherein the first registration information comprises a serial number SIMID of the memory of the mobile terminal, a card number and an electronic account login password of the intelligent card input by the user during registration,
wherein the second registration information comprises the SIMID and an identity verification password, and
wherein the third registration information comprises the SIMID and the card number of the intelligent card.

4. The mobile terminal according to claim 3, wherein the NFC authentication module is configured to acquire the card number of the intelligent card through a radio frequency interface and transmit the card number of the intelligent card to the security management module.

5. The mobile terminal according to claim 4, wherein the security management module is configured to: read the third registration information from the memory and decrypt the read third registration information to acquire the card number of the intelligent card and match the acquired card number of the intelligent card with the card number of the intelligent card acquired from the NFC authentication module, in the case the matching is successful, acquire the second registration information from the second database of the server through the remote control module and decrypt the acquired second registration information to acquire the identity verification password and match the acquired identity verification password with the identity verification password input by the user, in the case the matching is successful, acquire the first registration information from the first database of the server through the remote control module and decrypt the acquired first registration information to acquire the electronic account login password, and acquire the balance and/or transaction information stored in the intelligent card through the electronic account login password.

6. The mobile terminal according to claim 5, further comprising:
an account management module, configured to log in to an account of the intelligent card through the electronic account login password, and output and display the balance and/or transaction information stored in the intelligent card, and configured to add, delete and/or modify the card number of the intelligent card bound to the mobile terminal, the electronic account login password and the identity verification password.

7. A method for inquiring information stored in an intelligent card by using a mobile terminal, comprising:
acquiring registration information of a user;
encrypting the registration information to acquire encrypted registration information;
acquiring information about an intelligent card; and
decrypting the encrypted registration information to acquire the decrypted information, matching the information about the intelligent card with the decrypted information, and in the case the matching is successful, outputting a balance and/or transaction information stored in the intelligent card.

8. The method according to claim 7, wherein the registration information comprises: first registration information, second registration information and third registration information,
wherein the step of encrypting the registration information to acquire encrypted registration information comprises:
encrypting the first registration information, the second registration information and the third registration information respectively to acquire first encrypted registration information, second encrypted registration information and third encrypted registration information;
the method further comprising:
storing the third encrypted registration information in a memory of the mobile terminal; and
transmitting the first encrypted registration information and the second encrypted registration information to a server which stores the first encrypted registration information in a first database of the server and stores the second encrypted registration information in a second database of the server,
wherein the first registration information comprises a serial number SIMID of the memory of the mobile terminal, a card number and an electronic account login password of the intelligent card input by the user during registration,
wherein the second registration information comprises the SIMID and an identity verification password, and
wherein the third registration information comprises the SIMID and the card number of the intelligent card.

9. The method according to claim 8, wherein the step of decrypting the encrypted registration information to acquire the decrypted information, matching the information about the intelligent card with the decrypted information, and in the case the matching is successful, outputting the balance and/or transaction information stored in the intelligent card comprises:
reading the third registration information from the memory and decrypting the read third registration information to acquire the card number of the intelligent card;
matching the acquired card number of the intelligent card with the card number of the intelligent card acquired through a radio frequency interface;
in the case the matching is successful, acquiring the second registration information from the second database of the server and decrypting the acquired second registration information to acquire the identity verification password;
matching the acquired identity verification password with the identity verification password input by the user, in the case the matching is successful, acquiring the first registration information from the first database of the server and decrypting the acquired first registration information to acquire the electronic account login password; and
acquiring the balance and/or transaction information stored in the intelligent card through the electronic account login password.

10. A system for inquiring information stored in an intelligent card by using a mobile terminal, comprising: a mobile terminal, an intelligent card and a server,
wherein the mobile terminal comprises a Subscriber Identity Module (SIM) card identity registration module, a security management module, and a Near Field Communication (NFC) authentication module,
wherein the SIM card identity registration module is configured to acquire registration information of a user,
wherein the security management module is configured to encrypt the registration information to acquire encrypted registration information,
wherein the NFC authentication module is configured to acquire the information about the intelligent card and transmit the information about the intelligent card to the security management module, and
wherein the security management module is configured to decrypt the encrypted registration information to acquire the decrypted information, match the information about the intelligent card with the decrypted information, and in the case the matching is successful, output a balance and/or transaction information stored in the intelligent card, and
the server is configured to acquire the encrypted registration information from the mobile terminal and store the encrypted registration information.

11. The system according to claim 10, wherein the registration information comprises: first registration information, second registration information and third registration information,
wherein the security management module encrypts the first registration information, the second registration information and the third registration information respectively to acquire first encrypted registration information, second encrypted registration information and third encrypted registration information, and stores the third encrypted registration information in a memory of the mobile terminal, and
the mobile terminal further comprises a remote control module, configured to transmit the first encrypted registration information and the second encrypted registration information to a server which stores the first encrypted registration information in a first database of the server and stores the second encrypted registration information in a second database of the server.

12. The system according to claim 11, wherein the first registration information comprises a serial number SIMID of the memory of the mobile terminal, a card number and an electronic account login password of the intelligent card input by the user during registration,
wherein the second registration information comprises the SIMID and an identity verification password, and
wherein the third registration information comprises the SIMID and the card number of the intelligent card.

13. The system according to claim 12, wherein the NFC authentication module is configured to acquire the card number of the intelligent card through a radio frequency interface and transmit the card number of the intelligent card to the security management module.

14. The system according to claim 13, wherein the security management module is configured to: read the third registration information from the memory and decrypt the read third registration information to acquire the card number of the intelligent card and match the acquired card number of the intelligent card with the card number of the intelligent card acquired from the NFC authentication module, in the case the matching is successful, acquire the second registration information from the second database of the server through the remote control module and decrypt the acquired second registration information to acquire the identity verification password and match the acquired identity verification password with the identity verification password input by the user, in the case the matching is successful, acquire the first registration information from the first database of the server through the remote control module and decrypt the acquired first registration information to acquire the electronic account login password, and acquire the balance and/or transaction information stored in the intelligent card through the electronic account login password.

15. The system according to claim 14, wherein the mobile terminal further comprises:
an account management module, configured to log in to an account of the intelligent card through the electronic account login password, and output and display the balance and/or transaction information stored in the intelligent card, and configured to add, delete and/or modify the card number of the intelligent card bound to the mobile terminal, the electronic account login password and the identity verification password.
